# EUROPÄISCHE PATENTSCHRIFT

(11) **EP 2 181 874 B1**
(45) Veröffentlichungstag und Bekanntmachung des Hinweises auf die Patenterteilung: **01.12.2010**
(21) Anmeldenummer: 09012551.9
(22) Anmeldetag: 05.10.2009
(51) Int. Cl.: B60H 1/34

(54) **Luftauslasseeinrichtung für Fahrzeugklimaanlagen**
Air outlet device for vehicle air conditioning systems
Dispositif de sortie d'air pour climatisations de véhicules

(30) Priorität: 03.11.2008 DE 102008054360
(43) Veröffentlichungstag der Anmeldung: 05.05.2010
(73) Patentinhaber: Bayerische Motoren Werke Aktiengesellschaft, 80809 München (DE)
(72) Erfinder: Neumayer, Peter, 81476 München (DE); Unger, Manfred, 85419 Mauern (DE); Koelbl, Leopold, 85570 Ottenhofen/Herdweg (DE); Jonitz, Andreas, 26197 Ahlhorn (DE)

(56) Entgegenhaltungen:
- WO-A-93/02881
- DE-A1- 2 538 235
- DE-U- 1 892 765
- DE-U- 1 954 305

## Beschreibung

Die vorliegende Erfindung betrifft eine Luftauslasseinrichtung für Fahrzeugklimaanlagen gemäß dem Oberbegriff des Patentanspruches 1. Eine derartige Luftauslasseinrichtung ist aus DE 18 92 765 U, das als nächstliegender Stand der Technik angesehen wird, offenbart.

Im Innenraum moderner Fahrzeuge sind eine Vielzahl von Luftauslasseinrichtungen vorgesehen. Auf der der Fahrgastraummitte zugewandten Seite der Instrumententafel sind üblicherweise mehrere Luftauslässe mit schwenkbar angeordneten Luftleitelementen vorgesehen. Die Luftleitelemente können unterschiedlichste Formen haben und unmittelbar von Hand oder über Verstellräder o.ä. in die gewünschte Ausströmrichtung verschwenkt werden. Seit Jahrzehnten bekannt sind auch Luftauslasseinrichtungen mit einem Gehäuse und einem darin von Hand verschwenkbar angeordneten kugelringförmigen Luftleitelement.

Die kugelringförmigen Luftleitelemente sind im Gehäuse mit einer gewissen Vorspannkraft "vorgespannt". Die Vorspannkraft bestimmt die zum Verschwenken erforderliche Verstellkraft. Eine Verstellung der Vorspannkraft ist üblicherweise nur möglich, wenn die Luftauslasseinrichtung "ausgebaut" ist. Bei manchen Anordnungen beeinflussen auch Dekorelemente, welche die Luftauslasseinrichtung fahrgastraumseitig umgeben, die Vorspann- und somit die für das Verschwenken erforderlichen Verstellkräfte. Üblicherweise ist ein Einstellen des Spiels bzw. der Vorspannkräfte mittels Federn und Einstellschrauben möglich, die nur von der Rückseite der Luftauslasseinrichtung her zugänglich sind. Dies ist zeit- und entsprechend kostenaufwändig.

Aufgabe der Erfindung ist es, eine Luftauslasseinrichtung mit einem kugelringförmigen Luftleitelement zu schaffen, bei der die zum Verschwenken des Luftleitelements benötigte Verstellkraft auch im eingebauten Zustand der Luftauslasseinrichtung justierbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Luftauslasseinrichtung für Fahrzeugklimaanlagen, die ein Gehäuse mit einer Vorderseite und einer Rückseite und ein in dem Gehäuse schwenkbar und gleitend gelagertes kugelringförmiges Luftleitelement aufweist. Das Luftleitelement ist dazu vorgesehen, entsprechend seiner Schwenkstellung, Luft von der Rückseite in Richtung zur Vorderseite, d.h. in einen Fahrgastraum eines Fahrzeugs zu leiten, wobei die Luft das kugelringförmige Luftleitelement durchströmt. Ferner ist ein Spannelement vorgesehen, welches eine von der Rückseite in Richtung der Vorderseite wirkende Lager- bzw. Spannkraft auf das kugelringförmige Luftleitelement ausübt. Die Lager- bzw. Spannkraft bestimmt in erheblichem Maße die zum Verschwenken des Luftleitelements erforderliche Verstellkraft.

Der Kern der Erfindung besteht darin, dass das Spannelement von der Vorderseite des Gehäuses aus durch das kugelringförmige Luftleitelement hindurch relativ zu dem Gehäuse verdrehbar ist, wobei durch Verdrehen des Spannelements die Lager- bzw. Spannkraft verstellbar ist.

Zum Justieren der Lager- bzw. Spannkraft wird vorzugsweise ein Einstellwerkzeug verwendet. Bei dem Einstellwerkzeug kann es sich z.B. um ein gabelförmiges Werkzeug mit zwei oder mehreren "Zinken" bzw. Gabelarmen handeln, die von der Vorderseite der Luftauslasseinrichtung her durch das kugelringförmige Luftleitelement hindurch geführt werden und dann "von hinten her" an dem Spannelement angreifen bzw. in zugeordnete Ausnehmungen bzw. in ein zugeordnetes Rastprofil, das an der Rückseite des Spannelements vorgesehen sein kann, eingreifen. Mittels eines derartigen Justierwerkzeugs kann das Spannelement relativ zum Gehäuse verdreht und somit die Lager- bzw. Spannkraft eingestellt werden, ohne dass die Luftauslasseinrichtung aus dem Fahrzeug, insbesondere aus der Instrumententafel oder der Mittelkonsole des Fahrzeugs ausgebaut werden muss. Selbstverständlich sind für einen derartigen "Kugelausströmer" auch andere "Einbauorte" denkbar, wie z.B. der Innenbereich der so genannten "B-Säule" o.ä.

Das Spannelement kann ringförmig gestaltet sein. Beispielsweise kann das Spannelement mit einem Außengewinde versehen sein, das in ein im Bereich der Rückseite des Gehäuses im Gehäuse vorgesehenes Innengewinde eingeschraubt ist. Durch Verdrehen des Spannelements ergibt sich eine der Gewindesteigung entsprechende axiale Verschiebung des Spannelements und somit eine entsprechende Veränderung der Lager- bzw. Vorspannkraft.

Nach einer Weiterbildung der Erfindung weist das Spannelement einen äußeren Ring und einen inneren Ring auf, wobei der innere Ring über mehrere radial angeordnete Rippen mit dem äußeren Ring verbunden ist. Der innere Ring kann dabei die Funktion eines Schwenkanschlags für das Luftleitelement übernehmen. Bei maximaler Auslenkung des Luftleitelements liegt also ein Randbereich des kugelringförmigen Luftleitelements an dem inneren Ring des Spannelements an und begrenzt somit ein weiteres Verschwenken des Luftleitelements.

Zum Justieren der Lager- bzw. Spannkraft kann, wie bereits erwähnt, ein gabel- bzw. zinkenartiges Einstellwerkzeug verwendet werden. Es kann vorgesehen sein, dass die Gabelarme bzw. Zinken des Einstellwerkzeugs dabei mit den radialen Rippen zusammenwirken, welche den inneren und den äußeren Ring des Spannelements miteinander verbinden. Durch Aufbringen eines Drehmoments kann die Drehstellung des Spannelements und somit die Lager- bzw. Spannkraft justiert werden.

Vorzugsweise wirkt das Spannelement nicht unmittelbar mit dem Luftleitelement zusammen. Vielmehr kann zwischen dem Spannelement und dem Luftleitelement ein Lagerring vorgesehen sein, der die von dem Spannelement aufgebrachte Axial- bzw. Lagerkraft auf das kugelringförmige Luftleitelement überträgt. Um eine über den Umfang des kugelringförmigen Luftleitelements gleichmäßig verteilte Lager- bzw. Spannkraft zu erzeugen, können zwischen dem Spannelement und dem Lagerring in Umfangsrichtung des Luftleitelements verteilt mehrere Druckfederelemente, z.B. in Form kleiner Spiralfedern, angeordnet sein.

Vorzugsweise ist eine Verdrehsicherung vorgesehen, welche eine Relativdrehung des Lagerrings relativ zu dem Gehäuse der Luftauslasseinrichtung verhindert. Die Verdrehsicherung kann beispielsweise durch ein oder mehrere in Umfangsrichtung verteilt angeordnete, in Axialrichtung der Luftauslasseinrichtung verlaufende Längsrippen gebildet sein, die in zugeordnete Nuten eingreifen. Die Längsrippen können beispielsweise an dem Lagerring vorgesehen sein. Die zugeordneten Nuten können im Gehäuse vorgesehen sein oder umgekehrt.

Zur Verbesserung des Bedienkomforts sowie zur Vermeidung störender Geräusche kann zwischen einem Außenumfang des kugelringförmigen Luftleitelements und dem Lagerring z.B. eine Filzschicht angeordnet sein. Beim Verschwenken des Luftleitelements relativ zu dem Gehäuse gleitet eine Außenseite des Luftleitelements auf dem Filz. Die Filzschicht kann dabei in den Lagerring eingeklebt sein.

Ferner kann zwischen dem Außenumfang des Luftleitelements und einer Innenseite des vorderen Gehäusebereichs eine Filzschicht angeordnet sein.

Anstatt Filz kann selbstverständlich auch ein anderes Material verwendet werden.

Im Folgenden wird die Erfindung im Zusammenhang mit der Zeichnung näher erläutert. Es zeigen:
- Figur 1: Einen Querschnitt in Axialrichtung durch eine Luftauslasseinrichtung gemäß der Erfindung; und
- Figur 2: einen Querschnitt senkrecht zur Axialrichtung der in Figur 1 gezeigten Luftauslasseinrichtung.

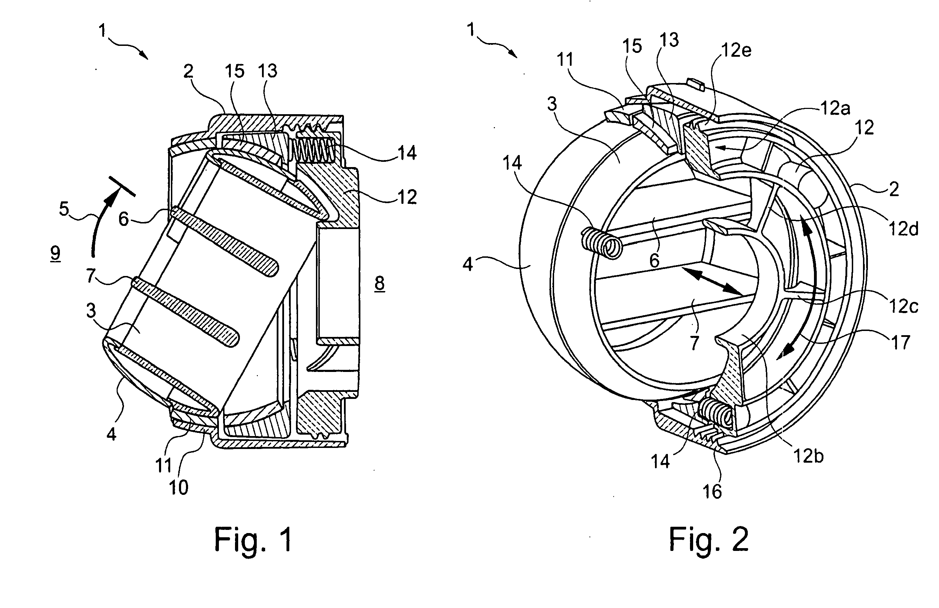

Die Figuren 1 und 2 zeigen eine Luftauslasseinrichtung 1, die ein kreisrundes Gehäuse 2 und ein darin schwenkbar angeordnetes, gleitend gelagertes, kugelringförmiges Luftleitelement 3 aufweist. Das Luftleitelement 3 weist eine Außenkontur 4 auf, die im Wesentlichen die Form eines Rings einer Kugelschale aufweist. Wie durch einen Pfeil 5 angedeutet ist, kann das Luftleitelement 3 in dem Gehäuse 2 verschwenkt werden. In dem Luftleitelement 3 sind zwei Luftleitlamellen 6, 7 angeordnet. Das Luftleitelement 3 ist dazu vorgesehen, Luft, die aus einem hier nicht näher dargestellten Luftleitkanal kommt, von einer Rückseite 8 zu einer Vorderseite 9 des Gehäuses 2 zu leiten und in die gewünschte Richtung zu lenken.

Wie aus Figur 1 ersichtlich ist, weist das Gehäuse 2 in seinem vorderen Bereich einen kugelförmig gestalteten Abschnitt 10 auf, der mit Filzmaterial 11 ausgekleidet ist. Das Filzmaterial 11 liegt an der Außenkontur des Luftleitelements 3 an. Beim Verschwenken des Luftleitelements 3 gleitet die Außenkontur 4 somit auf dem Filzmaterial 11. Von der Rückseite 8 her wird das Luftleitelement 3 durch ein Spannelement 12 abgestützt, wobei zwischen dem Spannelement 12 und dem Luftleitelement 3 ein Lagerring 13 angeordnet ist. Wie am besten aus Figur 1 ersichtlich ist, drückt das Spannelement 12 nicht unmittelbar gegen den Lagerring 13. Vielmehr sind in Umfangsrichtung der Luftauslasseinrichtung 1 mehrere Druckfedern 14 angeordnet, welche die vom Spannelement 12 ausgeübte Spannkraft auf den Lagerring 13 übertragen. Die Innenkontur des Lagerrings 13 ist kugelförmig gestaltet. Zwischen der Innenkontur des Lagerrings 13 und der Außenkontur 4 des Luftleitelements 3 ist ebenfalls Filzmaterial 15 angeordnet.

Wie aus Figur 2 ersichtlich ist, weist das Spannelement 12 einen Außenring 12a und einen Innenring 12b auf, die über radiale Lamellen 12c, 12d miteinander verbunden sind. Am Außenumfang des Spannelements 12 ist ein Außengewinde 12e vorgesehen, das in ein Innengewinde 16, das im rückwärtigen Bereich der Gehäuseinnenseite vorgesehen ist, eingeschraubt ist. Durch Drehen des Spannelements 12, was in Figur 2 durch einen Pfeil 17 angedeutet ist, kann das Spannelement 12 entsprechend der Gewindesteigung in Axialrichtung verschoben werden. Dadurch kann die Vorspannung des Luftleitelements 3 und somit die für eine Verschwenkbewegung des Luftleitelements 3 erforderliche Schwenkkraft justiert werden.

Im Vergleich zu herkömmlichen Luftauslasseinrichtungen mit kugelringförmigen Luftleitelementen besteht ein wesentlicher Vorteil der in den Figuren 1 und 2 gezeigten Luftauslasseinrichtung darin, dass mittels eines geeigneten gabel- oder zinkenförmigen Werkzeugs, das von der Vorderseite 9 durch das Luftleitelement 3 hindurch in die Luftauslasseinrichtung 1 eingeführt wird, das Spannelement 12 entsprechend dem Pfeil 17 verdreht und somit die Vorspannung des Luftleitelements 3 justiert werden kann. Die Justierung im eingebauten Zustand wird somit möglich.

## Patentansprüche

1. Luftauslasseinrichtung (1) für Fahrzeugklimaanlagen, mit
- einem Gehäuse (2), das eine Rückseite (8) und eine Vorderseite (9) aufweist,
- einem kugelringförmigen Luftleitelement (3), das schwenkbar und gleitend gelagert in dem Gehäuse (2) angeordnet ist und das dazu vorgesehen ist, entsprechend seiner Schwenkstellung, Luft von der Rückseite (8) zu der Vorderseite (9) zu leiten, wobei die Luft das Luftleitelement (3) durchströmt,
- einem Spannelement (12), welche eine von der Rückseite (8) in Richtung der Vorderseite (9) wirkende Lagerkraft auf das Luftleitelement (3) ausübt, wobei die zum Verschwenken des Luftleitelements (3) erforderliche Kraft von der Lagerkraft abhängt,
**dadurch gekennzeichnet, dass** das Spannelement (12) von der Vorderseite (9) des Gehäuses (2) durch das Luftleitelement (3) hindurch relativ zu dem Gehäuse (2) verdrehbar ist, wobei durch Verdrehen des Spannelements (12) die Lagerkraft verstellbar ist.

2. Luftauslasseinrichtung (1) nach Anspruch 1,
**dadurch gekennzeichnet, dass** das Spannelement (12) eine ringförmige Gestalt aufweist.

3. Luftauslasseinrichtung (1) nach einem der Ansprüche 1 oder 2,
**dadurch gekennzeichnet, dass** das Spannelement (12) ein Außengewinde (12e) aufweist, das in ein im Bereich der Rückseite (8) im Gehäuse (2) vorgesehenes Innengewinde (16) eingeschraubt ist.

4. Luftauslasseinrichtung (1) nach einem der Ansprüche 1 bis 3, **dadurch gekennzeichnet, dass** das Spannelement (12) einen äußeren Ring (12a) und einen inneren Ring (12b) aufweist, wobei der innere Ring (12b) über mehrere radial angeordnete Rippen (12c, 12d) mit dem äußeren Ring (12a) verbunden ist.

5. Luftauslasseinrichtung (1) nach Anspruch 4,
**dadurch gekennzeichnet, dass** der innere Ring (12b) einen Schwenkanschlag für das Luftleitelement (3) bildet.

6. Luftauslasseinrichtung (1) nach einem der Ansprüche 1 bis 5,
**dadurch gekennzeichnet, dass** zwischen dem Spannelement (12) und dem Luftleitelement (3) ein Lagerring (13) angeordnet ist, der die von dem Spannelement (12) aufgebrachte Lagerkraft auf das Luftleitelement (3) überträgt.

7. Luftauslasseinrichtung (1) nach Anspruch 6,
**dadurch gekennzeichnet, dass** zwischen dem Spannelement (12) und dem Lagerring (13) in Umfangsrichtung des Luftleitelements (3) verteilt mehrere Federelemente (14) angeordnet sind.

8. Luftauslasseinrichtung (1) nach einem der Ansprüche 1 bis 7,
**dadurch gekennzeichnet, dass** zwischen einem Außenumfang (4) und des Luftleitelements (3) und einer Innenseite eines vorderen Gehäuseteils Filzmaterial angeordnet ist.

9. Luftauslasseinrichtung (1) nach einem der Ansprüche 6 bis 8,
**dadurch gekennzeichnet, dass** zwischen dem Außenumfang (4) des Luftleitelements (3) und dem Lagerring (13) Filzmaterial angeordnet ist, wobei bei einem Verschwenken des Luftleitelements (3) relativ zu dem Gehäuse (2) eine Außenseite (4) des Luftleitelements (3) auf dem Filz gleitet.

## Claims

1. An air outlet device (1) for vehicle air conditioning systems, comprising
- a housing (2), which has a rear (8) and a front (9),
- a ball ring-shaped air guiding element (3), which is pivotably arranged and mounted in a sliding manner in the housing (2) and is provided, in accordance with its pivoting position, to guide air from the rear (8) to the front (9), wherein the air flows through the air guiding element (3),
- a clamping element (12), which exerts a bearing force acting from the rear (8) in the direction of the front (9) on the air guiding element (3), wherein the force required to pivot the air guiding element (3) depends on the bearing force,
**characterised in that** the clamping element (12) can be rotated relative to the housing (2) from the front (9) of the housing (2) through the air guiding element (3), the bearing force being adjustable by rotating the clamping element (12).

2. An air outlet device (1) according to claim 1, **characterised in that** the clamping element (12) has an annular shape.

3. An air outlet device (1) according to either of claims 1 or 2, **characterised in that** the clamping element (12) has an external thread (1 2e), which is screwed into an internal thread (16) provided in the region of the rear (8) in the housing (2).

4. An air outlet device (1) according to any one of claims 1 to 3, **characterised in that** the clamping element (12) has an outer ring (12a) and an inner ring (1 2b), the inner ring (1 2b) being connected by a plurality of radially arranged ribs (12c, 1 2d) to the outer ring (12a).

5. An air outlet device (1) according to claim 4, **characterised in that** the inner ring (12b) forms a pivoting stop for the air guiding element (3).

6. An air outlet device (1) according to any one of claims 1 to 5, **characterised in that** a bearing ring (13), which transmits the bearing force applied by the clamping element (12) to the air guiding element (3), is arranged between the clamping element (12) and the air guiding element (3).

7. An air outlet device (1) according to claim 6, **characterised in that** a plurality of spring elements (14) are arranged distributed between the clamping element (12) and the bearing ring (13) in the peripheral direction of the air guiding element (3).

8. An air outlet device (1) according to any one of claims 1 to 7, **characterised in that** felt material is arranged between an outer periphery (4) of the air guiding element (3) and an inner side of a front housing part.

9. An air outlet device (1) according to any one of claims 6 to 8, **characterised in that** felt material is arranged between the outer periphery (4) of the air guiding element (3) and the bearing ring (13), an outer side (4) of the air guiding element (3) sliding on the felt during a pivoting of the air guiding element (3) relative to the housing (2).

## Revendications

1. Dispositif de sortie d'air (1) d'une installation de climatisation de véhicule comprenant :
- un boîtier (2) ayant un côté arrière (8) et un côté avant (9),
- un élément de guidage d'air (3) en forme d'anneau sphérique, monté de manière pivotante et glissante dans le boîtier (2) pour diriger l'air du côté arrière (8) vers le côté avant (9) en fonction de sa position de basculement, l'air traversant l'élément de guidage d'air (3),
- un élément de serrage (12) exerçant sur l'élément de guidage d'air (3), une force de palier agissant à partir du côté arrière (8) en direction du côté avant (9), la force nécessaire au basculement de l'élément de guidage d'air (3) dépendant de la force du palier,
dispositif **caractérisé en ce que**
l'élément de tension (12) peut tourner par rapport au boîtier (2) à travers l'élément de guidage d'air (3) à partir du côté avant (9) du boîtier (2), la rotation de l'élément de serrage (12) réglant la force de palier.

2. Dispositif de sortie d'air (1) selon la revendication 1,
**caractérisé ce que**
l'élément de tension (12) a une forme annulaire.

3. Dispositif de sortie d'air (1) selon la revendication 1 ou 2,
**caractérisé ce que**
l'élément de tension (12) comporte un filetage extérieur (12e) vissé dans un filetage intérieur (16) prévu dans le boîtier (2) au niveau du côté arrière (8).

4. Dispositif de sortie d'air (1) selon l'une des revendications 1 à 3,
**caractérisé ce que**
l'élément de tension (12) comporte un anneau extérieur (12a) et un anneau intérieur (12b),
l'anneau intérieur (12b) étant relié à l'anneau extérieur (12a) par plusieurs nervures radiales (12c, 12d).

5. Dispositif de sortie d'air (1) selon la revendication 4,
**caractérisé ce que**
l'anneau intérieur (12b) forme une butée de basculement pour l'élément de guidage d'air (3).

6. Dispositif de sortie d'air (1) selon l'une des revendications 1 à 5,
**caractérisé ce qu'**
une bague de palier (13) est prévue entre l'élément de serrage (12) et l'élément de guidage d'air (3), cette bague de palier transmettant à l'élément de guidage d'air (3), une force de palier appliquée par l'élément de tension (12).

7. Dispositif de sortie d'air (1) selon la revendication 6,
**caractérisé ce que**
plusieurs éléments de ressort (14) sont répartis entre l'élément de serrage (12) et la bague de palier (13) dans la direction périphérique de l'élément de guidage d'air (3).

8. Dispositif de sortie d'air (1) selon l'une des revendications 1 à 7,
**caractérisé ce que**
du feutre est prévu entre la périphérie extérieure (4) et l'élément de guidage d'air (3) et le côté intérieur de la partie avant du boîtier.

9. Dispositif de sortie d'air (1) selon l'une des revendications 6 à 8,
**caractérisé ce que**
du feutre est prévu entre la périphérie extérieure (4) de l'élément de guidage d'air (3) et la bague de palier (13), et
lors du basculement de l'élément de guidage d'air (3) par rapport au boîtier (2), le côté extérieur (4) de l'élément de guidage d'air (3), glisse sur le feutre.
